# EUROPÄISCHE PATENTSCHRIFT

(11) **EP 2 952 952 B1**
(45) Veröffentlichungstag und Bekanntmachung des Hinweises auf die Patenterteilung: **01.04.2020**
(21) Anmeldenummer: 15166716.9
(22) Anmeldetag: 07.05.2015
(51) Int. Cl.: G02B 26/08, G02B 26/10, G03B 21/28, F21W 121/00

(54) **VORRICHTUNG ZUR ERZEUGUNG EINES KÜNSTLICHEN STERNENHIMMELS**
DEVICE FOR PRODUCTION OF AN ARTIFICIAL STARRY SKY
DISPOSITIF DE GÉNÉRATION D'UN CIEL ÉTOILÉ ARTIFICIEL

(30) Priorität: 05.06.2014 DE 102014107981
(43) Veröffentlichungstag der Anmeldung: 09.12.2015
(73) Patentinhaber: Heusel Innovations GmbH, 72768 Reutlingen (DE)
(72) Erfinder: Heusel, Jochen, 72768 Reutlingen (DE)
(74) Vertreter: Spachmann, Holger

(56) Entgegenhaltungen:
- DE-A1- 4 237 254
- DE-A1- 19 860 015
- DE-A1-102006 006 364
- DE-A1-102012 215 165
- US-A- 5 649 827
- Anonymous: "MEMpax , Thin Borosilicate Glass", , 6 October 2013 (2013-10-06), XP055322735, Retrieved from the Internet: URL:http://web.archive.org/web/20131006081 647/http://www.pgo-online.com/intl/katalog /mempax.html [retrieved on 2016-11-24]
- Spectral Optics: "Super Thin Plate Beamsplitters", , 23 May 2013 (2013-05-23), XP055322745, Retrieved from the Internet: URL:http://web.archive.org/web/20130523042 425/http://www.spectraloptics.com/stplate_ bs [retrieved on 2016-11-24]

## Beschreibung

### GEBIET DER ERFINDUNG

Die vorliegende Erfindung betrifft eine Vorrichtung zur Erzeugung eines künstlichen Sternenhimmels, die zumindest eine Lichtquelle zur Aussendung zumindest eines Primärlichtstrahls und zumindest eine Reflexionseinrichtung zur Reflexion des einen Primärlichtstrahls in eine Mehrzahl von Reflexionsstrahlen, die auf eine Projektionsfläche zur Darstellung eines künstlichen Sternenhimmels auftreffen, umfasst.

### STAND DER TECHNIK

Aus dem Stand der Technik ist eine Vielzahl von Vorrichtungen zur Erzeugung eines künstlichen Sternenhimmels bekannt, die mittels einer oder mehrerer Lichtquellen Lichtpunkte auf eine Projektionsfläche zur Darstellung eines künstlichen Sternenhimmels projizieren können. Für eine großflächige Projektion eines künstlichen Sternenhimmels ist es gewünscht, dass eine sehr hohe Anzahl von weißen oder verschiedenfarbigen Sternen als helle, scharf abgegrenzte und flimmerfreie Lichtpunkte dargestellt wird.

Die aus dem Stand der Technik bekannten Darstellungsvorrichtungen umfassen teilweise Lichtprojektoren, die mit einer zentralen starken Lichtquelle und diversen optischen Linsen und/oder Lochblenden einzelne Lichtpunkte projizieren können. Diese sind beispielsweise in Planetariumsprojektoren zu finden. Ein diesbezügliches Beispiel ist in der DE 11 2009 001 681 T5 dargestellt, bei der ein Faserelement, das aus einer Mehrzahl von Lichtleiterelementen besteht, Licht einer Lichtquelle von einem gebündelten Ende der Faserelemente zu einem Trägerelement führt, auf dem sich jeweils Enden der einzelnen Faserelemente an einer vorbestimmten Stelle befinden, und von dort der geführte Lichtstrahl ausgesendet wird, um ein bestimmtes Sternenmuster auf eine Projektionsfläche abbilden zu können.

Ein weiteres Beispiel ist in der DE 3 641 049 A1 zu finden, bei dem ebenfalls Lichtleiter Licht einer Lichtquelle an eine Platte mit einem vorbestimmten Sternenmuster heranführt, um von dort dieses Sternenmuster, das mithilfe von nachgeordneten Linsen fokussiert werden kann, auf eine Projektionsfläche abzustrahlen.

In der DE 4 026 133 A1 ist eine gattungsgleiche Vorrichtung zur Erzeugung eines künstlichen Sternenhimmels beschrieben, bei dem Licht einer Lichtquelle durch eine mit Löchern versehene Platte hindurchfällt, um das Lochmuster der Platte auf einer Projektionsfläche abzubilden. Eine ähnliche Variante ist in der DE 203 11 301 U1 offenbart.

Daneben gibt es Vorschläge, mittels schneller Ablenkeinheiten und beweglichen Spiegeln sogenannte Scannerprojektoren einzusetzen, um mittels Laserlicht einen Sternenhimmel oder beliebige Figuren an einer Projektionsfläche abzubilden. Hierdurch wird ähnlich wie beim Prinzip einer Kathodenstrahlröhre (Braunsche Röhre) eines klassischen Röhrenfernsehers ein Laserstrahl in schneller Abfolge über eine Projektionsfläche geführt und ein- und ausgeschaltet, um ein Bild mit hoher Frequenz- und Bildwiederholrate auf eine Projektionsfläche abzustrahlen. Diese Abtastdarstellung erzeugt eine hochfrequent getaktete, flimmernde Darstellung eines Sternenhimmels.

Alternative Sternenhimmel-Erzeugungsvorrichtungen basieren auf der Zwischenschaltung eines optischen Beugungs-/Diffraktionsgitters zur Aufspaltung eines einzelnen Lichtstrahls, wobei ein Ablenkwinkel von der Wellenlänge und Farbe des Lichts abhängig ist, wobei insbesondere ein monochromatischer Sternenhimmel dargestellt werden kann. Hierzu werden unter anderem Prismen eingesetzt, um die Anzahl der Lichtstrahlen zu erhöhen und verschiedenfarbige Lichtstrahlen herzustellen. Multichromatisches oder weißes Licht erzeugt einen ungewünschten Regenbogeneffekt aufgrund der frequenzabhängigen Beugungseigenschaft des Lichts.

In den obigen Beispielen von Sternenhimmel-Erzeugungsvorrichtungen werden in der Regel nur diffuse und nur mit einer geringen Anzahl von Leuchtpunkten darstellbare Sternenhimmel ermöglicht, die nur geringe Leuchtkraft aufweisen und eine starke Abdunkelung des Raumes notwendig machen. Des Weiteren ist der technische Aufwand zur Herstellung der Vorrichtung relativ hoch und die Lebensdauer beim Einsatz von leistungsstarken Weißlichtlampen relativ kurz. Es werden zudem leistungsstarke Kühlungssysteme eingesetzt, um die Temperatur der Lichtquelle kontrollieren zu können.

Für eine Projektion eines scharf begrenzten Lichtpunkts bietet es sich in jüngster Zeit an, Weißlichtlaser oder RGB-Laser einzusetzen, die mit einem scharf gebündelten weißen oder multichromatischen Lichtstrahl einen idealen Sternpunkt auch in großer Entfernung projizieren können. Das scheinbar weiße Licht des Lasers kann beispielsweise aus einer Mischung der Grundfarben Rot, Grün und Blau erzeugt werden oder kann die beiden Grundfarben Blau und Gelb enthalten. Allerdings ist es bisher unbekannt, wie ein derartiges weißes Laserlicht in eine Vielzahl scharf fokussierter einzelner Lichtpunkte ohne großen technischen Aufwand aufspaltbar ist.

Die bisher bekannten Lösungen können die gewünschten Projektionseigenschaften nur mit sehr hohem technischem Aufwand und nur mit geringer Leuchtkraft trotz hoher Lichtquellenleistung darstellen. Auch der Einsatz einer modernen Beamertechnik ist bislang nicht in der Lage, einen großflächigen brillanten Sternenhimmel zu erzeugen. Einfarbige Sternenhimmelprojektoren mit grünem, rotem oder blauem Laserlicht alleine können durch Verwendung eines optischen Beugungs- oder Brechungsgitters sogenannte Diffraktionsgitter eine Strahlenteilung erzeugen und somit einzelne monochromatische Lichtpunkte erzeugen. Allerdings scheitern diese daran, bei weißem Laserlicht, das mindestens zwei, insbesondere eine hohe Anzahl von verschiedenen Wellenlängenanteilen umfasst, weiße oder mehrfarbige scharf abgegrenzte Laserpunkte zu erzeugen, da die Diffraktionsgitter wellenlängenbasiert arbeiten und kein Weißlicht verschmierfrei an eine einzelne Stelle ablenken können. Durch die Beugung bzw. Brechung des Lichts mit unterschiedlichen Wellenlängen wird dieses auch in unterschiedliche Richtungen abgelenkt und "verschmiert" bzw. in einfarbige Lichtpunkte aufgeteilt.

Der oben angesprochene Lösungsansatz eines zeilenweisen Schreibens einer Lichtdarstellung durch ein sequenzielles Ablenken von weißem Laserlicht mit beweglichen Spiegeln (z.B. schnelle Galvanometerspiegel) in eine X- und eine Y-Richtung erfordert den Einsatz einer gepulsten Laserquelle, wenn der Spiegel auf die jeweils gewünschte Stelle positioniert und dort ein Lichtpunkt angezeigt werden soll. Dabei wird die Laserquelle immer nur eingeschaltet, wenn der Spiegel auf der jeweils gewünschten Position positioniert ist. Die mögliche Geschwindigkeit der sequenziellen Abtastung ist aufgrund der bewegten Massen begrenzt und führt bei einer entsprechend hohen Anzahl von Sternen zu einem unschönen Flimmern und Flackern der Projektion mit abnehmender Leuchtintensität. Da die Laserquelle während der Bewegung des Spiegels abgeschaltet und angeschaltet wird, ist die Lichtleistung bzw. Helligkeit der einzelnen Sternpunkte gering. Eine derartige Zeilenschreibtechnik ist insbesondere im Showlaserbereich bekannt, um eine Vielzahl verschiedenartiger Darstellungen zu erreichen, allerdings ungeeignet, eine großflächige statische multichromatische Sternenhimmeldarstellung mit hoher Leuchtkraft darzustellen.

In der DE 10 2004 026 731 A1 ist eine Vorrichtung für eine Decke oder Wand mit einer transparenten Glas- oder Kunststofffläche beschrieben, wobei Reflektionsmittel umfasst sind, die ein Teil eines im Inneren eines Raums abgestrahlten Lichts reflektiert, um so die transparente Fläche im Tageslicht transparent erscheinen und bei Dunkelheit reflektierend erscheinen zu lassen. Die Reflektionsmittel sind als Hologrammstrukturen ausgebildet. Mit einer derartigen Fläche kann kein überzeugender Lichthimmel dargestellt werden, insbesondere ist die Verteilung der Reflektionsmittel und somit der Lichtpunkte fest vorgegeben und die reflektierende Wand muss zuvor mit einer derartigen transparenten Fläche überzogen werden.

Die 10 2012 215 165 A1 betrifft einen Dekorverbund mit dynamischen Lichtstrukturen in Fahrzeugen zu Dekorzwecken, wobei der Dekorverbund zumindest teilweise durchleuchtbare Dekorschicht und eine Leuchtschicht mit Licht ausstrahlenden Bereichen aufweist, und die Dekorschicht zur Leuchtschicht relativ zueinander beweglich ist. Hierdurch sollen Bedienelemente hervorgeheben werden, und eine augenfällige Ambientbeleuchtung gegeben sein. Die leuchtende Oberfläche bedarf wiederum einer Beschichtung mit einer Leucht- und einer Dekorschicht, auch ist die Darstellung eines beliebigen Sternenhimmels nicht gegeben.

Die 10 2006 006 364 A1 betrifft ebenfalls eine Dekorbeleuchtung eines Kraft- oder Luftfahrzeugs, wobei an einer Berandung einer Projektionsfläche eine oder mehrere Lichtquellen angeordnet sind, die eine Tag- oder Nachtprojektion unterschiedlicher Bildmotive auf der Fläche projizieren kann. Die Lichtquelle kann als Leuchtstoffkörper, Leuchtdiode oder Leuchtfolie ausgebildet sein, und es kann die Projektionsfläche als DIA ausgelegt sein. Eine Darstellung eines Sternenhimmels ohne größere konstruktive Maßnahmen kann hierdurch nicht erreicht werden.

In der DE 1 984 334 A ist eine holographische Kamera mit veränderlichem Aufnahmewinkel beschrieben, wobei mittels eines Lasers und aufgespalteten Laserstrahlen, die auf einer photographischen Plate interferieren. Ein bildgebendes Verfahren, wie es für eine Sternenhimmeldarstellung erforderlich ist, wird hier nicht angesprochen.

Aus der WO 01/59507 A1 ist ein optischer Strahlteiler und eine Anzeigevorrichtung bekannt, die für eine 3D-Bildwidergabe konzipiert sind. Diese beinhalten eine Reihe von Linsen und einen X-förmigen Strahlteiler, und dient zur Erzeugung eines 3D-Bildeindruckes, z.B. in einer holographischen Brille. Eine Verbindung zu einer Sternenhimmeldarstellung ist nicht gegeben.

Die DE 198 60 015 A1 betrifft eine Zeilenablenkeinrichtung für einen Laserstrahl zur Erzeugung eines lasergenerierten Bildes, bei der ein semitransparenter Körper mit einem beweglichen Spiegel zusammenwirkt, wobei der Körper eine gekrümmte oder schräge Oberfläche aufweist, um mit einer Bewegung des Spiegels zusammenwirkend eine Ablenkung des Laserstrahls bewirkt. Hierdurch kann eine schnelle Zeilenablenkung erreicht werden, und Geisterbilder bei Laserbildprojektionen unterdrückt werden. Eine Anwendung im Rahmen einer statischen Sternenhimmeldarstellung ist nicht angesprochen.

Die DE 42 37 254 A1 offenbart ein Verfahren zur Aufnahme eines Hologramms sowie eine Vorrichtung zur Durchführung des Verfahrens und Wiedergabe von in Hologrammfolien aufgezeichneten Hologrammen. Eine Möglichkeit Hologramme zu erstellen besteht darin, das darzustellende Motiv auf eine Folie, die sogenannte Hologrammfolie, zu übertragen und anschließend mit einer Lichtquelle zu Bestrahlen, wobei mehrere Teilreflexionsstrahlen mit einem Referenzlichtstrahl interferieren. Die Darstellung eines Sternenhimmels bzw. einer unendlich weit entfernten Lichtquelle wird in der DE 42 37 254 A1 unter Erstellung einer Hologrammfolie durch Belichtung der Folie mittels interferierender Überlagerung eines Mehrfachreflexionsstrahls und eines Referenzstrahls erreicht. Eine Darstellung des Sternenhimmels ist ohne Erstellung einer Hologrammfolie nicht möglich. Zur Darstellung eines großflächigen fiktiven Sternenhimmens werden mehrere dieser erzeugten Hologrammfolien in einer Art Rahmen nebeneinander eingespannt und bestrahlt.

In der Internetveröffentlichung "MEMpax, Thin Borosilicate Glass" (https://www.pgo-online.com/intl/katalog/mempax.html) vom 6. Oktober 2013 ist ein dünnes Borosilikatglasplättchen mit einer geringen Oberflächenrauheit, geringer thermischer Ausdehnung, guter chemischer Beständigkeit, geringer Autofluoreszenz und hoher Lichttransmission beschrieben. Dieses kann als Objektträger zur Anwendung unter einem Mikroskop, zur Anwendung bei anodischem Bonden oder bei Sensoren eingesetzt werden. Die Standarddicken der Glasplättchen liegen bei 0,20 mm bis 0,50 mm.

Durch die Internetveröffentlichung "Super Thin Plate Beamsplitters" (http://www.spectraloptics.com/stplate_bs) vom 23. Mai 2013 wird eine Oberflächenbeschichtung (substrate) für Glasplättchen vorgestellt, die als präzise Strahlteilungsschicht dient. Diese Schicht hat eine Dicke von 0,15 mm und ist damit besonders dünn ausgebildet, wobei der Substratträger (O-Ring) eine Dicke von 6,35mm aufweist. Damit erfährt ein Lichtstrahl, der durch ein dickeres Plättchen geleitet wird, eine nur minimale bis keine Ablenkung parallel zu dem einfallenden Lichtstrahl.

Aufgabe der Erfindung ist es, die oben genannten Nachteile zu überwinden und eine flimmerfreie und günstig herstellbare Projektionsmöglichkeit zur Darstellung eines künstlichen Sternenhimmels vorzuschlagen.
Die oben genannten Nachteile werden durch eine Vorrichtung nach der Lehre des Anspruchs 1 überwunden. Vorteilhafte Weiterbildungen der Erfindung sind Gegen stand der abhängigen Ansprüche.

### OFFENBARUNG DER ERFINDUNG

Die Erfindung schlägt eine Vorrichtung zur Erzeugung eines künstlichen, weißen oder mehrfarbigen Sternenhimmels vor, die zumindest eine Lichtquelle zur Aussendung zumindest eines polychromatischen oder weißen Primärlichtstrahls und zumindest eine Reflexionseinrichtung zur Reflexion des Primärlichtstrahls in eine Mehrzahl von Reflexionslichtstrahlen, die auf eine Projektionsfläche zur Darstellung eines künstlichen Sternenhimmels auftreffen, umfasst. Die Reflexionseinrichtung umfasst zumindest ein, insbesondere eine Mehrzahl von Teilreflexionselementen, wobei jedes Teilreflexionselement einen Teil des Primärlichtstrahls an einer erste Oberfläche der Lichtquelle zugewandten Seite reflektiert und einen Teil des Primärlichtstrahls im Wesentlichen ungehindert passieren lässt, wobei die Oberfläche des zumindest einen Teilreflexionselements in einem Winkel ≠90° gegenüber der Achse des Primärlichtstrahls abgewinkelt ist. Mit anderen Worten schlägt die Erfindung eine Vorrichtung zur Erzeugung eines künstlichen Sternenhimmels vor, die eine Lichtquelle umfasst, wobei die Lichtquelle einen Primärlichtstrahl, der polychromatisch oder weiß ist, in eine Reflexionseinrichtung abstrahlt. Die Reflexionseinrichtung umfasst eine, insbesondere eine Mehrzahl von Teilreflexionselementen, beispielsweise semitransparente Spiegelflächen oder dünne teilreflektierende Plättchen oder Folien, die einen Teil des Primärlichtstrahls ungehindert ohne wesentlichen Beugungs- oder Brechungseffekte durchdringen lassen, und einen Teil des Primärlichtstrahls reflektieren. Gemäß des Reflexionsgesetztes entspricht der Einfalls-winkel des Primärlichtstrahls auf einer der Lichtquelle zugewandten Oberflächenseite des Teilreflexionselements in Bezug auf die Oberflächennormale dem Reflexionswinkel, so dass der Teil des Primärlichtstrahls, der reflektiert wird, in einem dem Einfallswinkel entsprechenden Ausfallswinkel zur Oberflächennormale des Teilreflexionselements abgestrahlt wird. Ist die Oberfläche des Teilreflexionselements in einem Winkel ≠90° gegenüber der Achse des Primärlichtstrahls abgewinkelt, so wird der Reflexionslichtstrahl nicht zur Lichtquelle hin, sondern beispielsweise in eine Richtung zur Projektionsfläche abgelenkt. Der Winkel kann in allen drei Raumrichtungen gegenüber der Primärlichtstrahlachse variieren, um Lichtstrahlen auf beliebige Stellen einer Projektionsfläche oder in Richtung weiterer

Teilreflexionselemente ablenken zu können. Somit bietet es sich an, dass der Ausrichtungswinkel einer Oberflächennormale des Teilreflexionselementes zwischen einer Lage der Primärstrahlachse und einer Normalen der Projektionsfläche liegt. Dadurch, dass ein Teil des Primärlichtstrahls durch das Teilflexionselement durchdringen kann, können weitere, dahinter angeordnete Teilreflexionselemente, die wiederum im gleichen oder in einem anderen Winkel gegenüber der Achse des Primärlichtstrahls abgewinkelt sind, in andere Richtungen Reflexionslichtstrahlen erzeugen. Die Anzahl der Teilreflexionselemente bestimmt somit die Anzahl der Leuchtpunkte, die auf der Projektionsoberfläche dargestellt werden. Umfasst die Reflexionseinrichtung beispielsweise ein spiegelndes, zumindest in Richtung Projektionsfläche teilgeöffnetes Gehäuse, so werden Lichtstrahlen, die nicht in Richtung der Projektionsfläche reflektiert werden, wiederum in den Gehäusewänden auf einer Oberfläche der Teilreflexionselemente gelenkt, so dass sich weitere, sekundäre, tertiäre oder Reflexionslichtstrahlen höherer Ordnung ergeben, die als schwächere Lichtpunkte ebenfalls auf die Projektionsfläche treffen können. So werden auf der Projektionsfläche nicht nur Reflexionslichtstrahlen nach einer ersten Reflexion, sondern auch nach einer zweiten, dritten oder mehrfachen Reflexion mit unterschiedlichen Intensitäten dargestellt, so dass der Eindruck eines Sternenhimmels mit "nahen" und "fernen" Sternen geschaffen wird, so dass sich der Effekt einer räumlichen Tiefe mit Sternendarstellung in unterschiedlicher Nähe zum Betrachter ergibt. Somit wird eine äußerst realistische Darstellung eines dreidimensionalen Sternenhimmels erreicht. Hierdurch kann auf einer großen Fläche eine unzählige Anzahl von weißen und scharf fokussierten Sternen mit hellen scharf begrenzten absolut flimmerfreien winzigen Lichtpunkten unterschiedlicher Intensität und Position ermöglicht, die mit den bisherigen Technologien nicht darstellbar waren. Die Teilreflexionselemente können entlang der Primärstrahlachse angeordnet sein, es können allerdings auch Teilreflexionselemente außerhalb der Primärstrahlachse angeordnet sein, die von bereits reflektierten Lichtstrahlen getroffen sind, und die vorgesehen sind, Reflexionslichtstrahlen höherer Ordnung zu erzeugen.

Erfindungsgemäß umfasst das Teilreflexionselement ein transparentes oder semitransparentes Kunststoff- oder Glasplättchen, dessen Dicke als 1 mm beträgt, insbesondere geringer als 500 µm beträgt, bevorzugt 200µm oder geringer ist. Derartig dünne Glas-, Kunststoff- oder Halbleiterplättchen haben die Eigenschaft, an ihrer zur Lichtquelle orientierten Oberfläche einen Teil eines Primärlichtstrahls zu reflektieren, und einen Teil durch das Plättchen durchscheinen zu lassen. Durch die geringe Dicke kommt es zu kaum nennenswerten Brechungseffekten, so dass es innerhalb des Glasplättchens kaum zur Mehrfachreflexion und damit zu einer diffusen Streuung der Reflexionsstrahlen kommt, ein Weißlichtstrahl nicht in verschiedene Farben aufgefächert wird und, im Gegensatz zu handelsüblichen dickeren Spiegel- oder Glasplatten, die Mehrfachreflexion und Mehrfachtransmission bewirken, ein nahezu ungehindertes Durchdringen des Primärlichtstrahls durch das Glasplättchen ermöglichen. Hierdurch können kaskadisch eine Vielzahl von Teilreflexionselementen hintereinander angeordnet werden, die das Sternenlicht in verschiedene Richtungen streuen und die ein scharf abgegrenztes Sternenmuster erscheinen lassen. Bei einer entsprechend geeigneten und geschickten Anordnung der teilreflektierenden statischen oder beweglichen Scheibenplättchen in verschiedene Richtungen bezüglich der Primärlichtstrahlachse und der Projektionsfläche kann durch die vielfach hin und her reflektierten und aufgeteilten Lichtstrahlen eine hohen Anzahl von Einzelstrahlen erzeugt werden, ohne dass eine Brechung oder Beugung des Strahls erfolgt, wodurch einzelne Wellenlängen unterschiedlich abgelenkt werden. Somit wird auf der Projektionsfläche eine Hohe Anzahl von Weißlichtsternen darstellbar und hiermit ein realistisch wirkender Sternenhimmel illuminiert.

Erfindungsgemäß ist eine Mehrzahl von Teilreflexionselementen entlang der Primärlichtstrahlachse in unterschiedlichem Winkel zum Primärlichtstrahl angeordnet. Die Anzahl der hintereinander angeordneten Teilreflexionselemente bestimmt die Anzahl der Primärreflexionslichtstrahlen und somit die Anzahl heller Sternenpunkte auf der Projektionsfläche. Durch unterschiedliche Winkel wird eine breite Streuung insbesondere bei großflächigen Projektionsflächen erreicht. Der Winkel einer Oberflächennormale des Teilreflexionselements zwischen Primärlichtstrahlachse und einer Normalen der Projektionsfläche kann insbesondere für jedes Teilreflexionselement verschieden gewählt werden, um eine gleichmäßige Verteilung der Lichtpunkte über der Projektionsfläche zu gewährleisten. Genauso können einzelne Teilreflexionselemente gleich oder ähnlich ausgerichtet sein, um eine Sternenhäufung, z.B. Galaxiedarstellung zu bewirken.

In einer vorteilhaften Weiterbildung kann das oder die Plättchen mit einer teildurchlässigen dünnen metallischen oder dielektrischen Reflexionsschicht mit einer Dicke von geringer als 100 nm, bevorzugt geringer als 50 nm, beschichtet werden. Durch das Aufbringen einer dünnen metallischen oder dielektrischen Reflexionsschicht kann die Reflexionseigenschaft der Teilreflexionselemente beeinflusst werden, so dass insbesondere eine Erhöhung der Reflexionseigenschaft bei weit entfernt von der Lichtquelle angeordneten Teilreflexionselementen gegenüber den näher der Lichtquelle angeordneten Teilreflexionselementen erreicht werden kann. Somit können die Reflexionseigenschaft und die abnehmende Intensität des Primärlichtstrahls nach dem Durchgang durch zwei oder mehrere Teilreflexionselemente durch eine erhöhte Reflexionsfähigkeit der Teilreflexionselemente ausgeglichen werden, um eine hohe Anzahl von gleich hell erscheinenden Sternen zu bewirken.

Vorteilhaft kann die Reflexionseinrichtung eine teilgeöffnete Gehäusewandung aus Spiegelelementen mit zumindest einer Öffnung zum Eintritt des Primärlichtstrahls und zumindest einer Ausnehmung zum Austritt reflektierter Lichtstrahlen aufweisen, wobei das Teilreflexionselement auf einer Spiegelgrundfläche angeordnet ist und bevorzugt in zumindest einer weiteren, zur Spiegelgrundfläche abgewinkelten, bevorzugt zwischen 45° und 135° abgewinkelten Ebene von Spiegelbegrenzungselementen umfasst ist. Durch eine innen verspiegelte Gehäusewandung, bei der die Teilreflexionselemente auf einer ersten Spiegelgrundfläche angeordnet sind, und bevorzugt in drei, vier oder mehreren um zwischen 45° und 135° zur Spiegelgrundfläche angeordneten Ebenen Begrenzungsspiegelelemente umfasst sind, wird ein hochreflektives Gehäuse um die Teilreflexionselemente geschaffen. Somit kann dass Licht abhängig vom Reflexionswinkel lediglich durch die Austrittsausnehmung in Richtung der Projektionsfläche austreten ,oder an den verspiegelten Gehäusewandungsoberflächen in die Reflexionseinrichtung zurück reflektiert werden, so dass das Licht letztlich erneut durch ein Teilreflexionselement oder einem Begrenzungsspiegel in Richtung Projektionsfläche abgelenkt wird. Somit wird eine maximale Lichtausbeute erreicht, bei dem die gesamte Intensität des Primärlichtstrahls auf die Projektionsfläche zur Darstellung einzelner Sternenpunkte abgegeben wird. Hierdurch wird die Intensität bzw. Energieaufnahme der Lichtquelle reduziert bzw. es kann bei gegebener Intensität ein möglichst heller und kontrastreicher Sternenhimmel dargestellt werden. Das Gehäuse kann grundsätzlich einen quaderförmigen Grundkörper aufweisen, kann allerdings auch zumindest eine gekrümmte Außenwandung aufweisen. So kann das Gehäuse der Reflexionseinrichtung auch in Form eines Zylinders mit einer runden oder polygonalen Grundfläche ausgestaltet sein. Die innere Gehäusewandung ist zumindest teilweise verspiegelt und kann einzelne oder eine Mehrzahl von ebenen Spiegelsegmenten umfassen. So kann das Gehäuse der Reflexionseinrichtung ähnlich wie ein Kaleidoskop oder Invers zur Funktion einer Diskospiegelkugel aufgebaut sein. In einer vorteilhaften Weiterbildung sind die Begrenzungsspiegel im Winkel veränderbar der in bevorzugter Ausführung elektrisch, mechanisch oder elektromechanisch verstellbar.

In einer Fortbildung der Erfindung kann die Lichtquelle zumindest ein Weißlichtlaser, ein RGB-Laser und/oder ein oder mehrere Mehrfarblaser umfassen. In dieser Weiterbildung wird vorgeschlagen, dass die Lichtquelle zumindest einen, insbesondere eine Mehrzahl von verschiedenen Lasertypen umfassen kann, insbesondere einen Weißlichtlaser, der beispielsweise als RGB-Laser oder als Blau-Gelb-Laser eingerichtet sein kann. Alternativ oder zusätzlich können Ein- oder Mehrfarblaser, die beispielsweise nur bestimmte Lichtfarben darstellen können, umfasst sein, so dass nicht nur Weißlicht, sondern auch auch farbige Lichtpunkte dargestellt werden können. Dies erhöht zum einen die Anzahl der darstellbaren Sternenfarben und entspricht somit auch dem visuellen Eindruck eines natürlichen Sternenhimmels, bei dem einzelne Sterne und Sonnennahe Planeten nicht nur weiß, sondern in verschiedenen Farben erscheinen. Durch den Einsatz eines RGB-Weißlichtlasers können nahezu beliebig viele Strahlen und Lichtpunkte mit unterschiedlichen Intensitäten erzeugt werden, um einen naturgetreuen künstlichen Himmel, insbesondere auf einer großen Fläche mit unzähligen vielen weißen Sternen mit hellscharfen Begrenzungen und flimmerfreien winzigen Leuchtpunkten darzustellen. Somit bietet sich der Einsatz eines derartigen Weißlichtlasers insbesondere für sehr großflächige Projektionsflächen, beispielsweise in Saunalandschaften, Schwimmbädern oder öffentlichen Veranstaltungsorten an, wobei unterschiedliche Intensitäten und Positionen auch zur Darstellung von realistischen Sternbildern erreicht werden können.

In einer vorteilhaften Weiterbildung kann der Winkel der Oberfläche zumindest eines Teilreflexionselements gegenüber dem Primärlichtstrahl verändert werden, insbesondere durch ein mechanisches, elektrisches oder elektromechanisches Stellelement verändert werden. Das Stellelement kann beispielsweise eine mikromechanisches, elektromagnetisches, magnetostriktives, thermomechanisches (Bimetall-basiertes) oder piezoelektrisches Stellelement verändert werden. Durch die Veränderung des Anstellwinkels der Oberfläche des zumindest einen Teilreflexionselements gegenüber der Achse des Primärstrahls können Bewegungen einzelner oder Gruppen von Sternen bzw. des gesamten Sternenhimmels auf der Projektionsfläche animiert werden.. So können einzelne Sterne oder Sterngruppen sich aufeinander zubewegen bzw. voneinander wegbewegen und somit eine Zoom-Funktion dargestellt bzw. eine Bewegung auf die Sterne zu oder von den Sternen weg, wie bei einem Flug durch das Weltall simuliert werden. Ebenso kann eine Animation eines Sternenlaufs, wie er beispielsweise auch durch das Drehen der Erde gegenüber dem Sternenhimmel verursacht wird, nachgebildet werden. Hierdurch erhöht sich die Lebendigkeit der Sternenhimmeldarstellung und es können beispielsweise Tag-Nacht-Phasen oder die Veränderung des Sternenhimmels bezüglich des Erdenlaufs um die Sonne nachgestellt werden.

Vorteilhafterweise kann die Ausrichtung der Reflexionseinrichtung gegenüber der Primärstrahlachse insgesamt veränderbar, insbesondere mittels eines mechanischen, elektrischen, elektromechanischen oder piezoelektrischen Aktuatorelements verändert werden. Durch die Veränderung der Ausrichtung der Reflexionseinrichtung gegenüber der Primärstrahlachse, insbesondere eine Lageveränderung der Lichtquelle und/oder eine Lageveränderung der Reflexionseinrichtung gegenüber der Primärstrahlachse oder der gesamten Vorrichtung, kann insgesamt eine Verschiebung des gesamten Sternenhimmels gegenüber der Projektionsfläche erreicht werden. Werden beispielsweise nicht nur eine, sondern mehrere Reflexionseinrichtungen in einer Vorrichtung umfasst, so können diese relativ zueinander bewegt werden, um beispielsweise große Sternengruppen gegeneinander zu bewegen und somit eine Erhöhung der Animationswirkung bei der Sternendarstellung zu erreichen.

In einer vorteilhaften Weiterbildung kann ein Teil des Primärstrahls oder ein weiterer Primärstrahl entlang einer lageveränderlichen Strahlachse durch mindestens einen transparenten oder semitransparenten Brechungskörper oder auf einen verspiegelten Reflexionskörper, insbesondere ein Zylinder, ein Ellipsoid, eine Kugel oder einem strukturiertem Körper gelenkt werden, oder ein lageveränderlicher Brechungs- oder Reflexionskörper durch eine Strahlachse eines Teils des Primärstrahls oder eines weiteren Primärstrahls bewegbar sein, um dem künstlichen Sternenhimmel eine animierte Darstellung eines künstlichen Kometenflugs zu überlagern. Die Lichtquelle oder eine weitere Lichtquelle kann einen Primärlichtstrahl auf einen transparenten Kunststoff-, Glas- oder einen andersartigen transparenten oder semitransparenten Körper oder reflektierenden Körper fallen lassen, der durch seine Brechungswirkung bzw. der Oberflächenkrümmung des Körpers ein Verschmieren des Strahls bewirkt, so dass eine längliche Abbildung auf der Projektionsfläche erscheint. Durch eine relative Bewegung entweder der Primärlichtstrahlachse zum Brechungs- oder Reflexionskörper oder des Körpers gegenüber der Primärlichtstrahlachse, bewegt sich die Kometenabbildung über die Projektionsfläche, so dass ein Kometendurchgang durch die künstliche Sternenhimmeldarstellung erzeugt werden kann. Dies erhöht die Lebendigkeit der Sternenhimmeldarstellung, wodurch beispielsweise ein Kometen- oder Meteoritendurchgang oder ein Meteoritenschauer dargestellt werden kann.

In einer vorteilhaften Weiterbildung kann die Vorrichtung mindestens eine nicht bewegliche oder bewegliche Blende, mindestens einen Spiegel oder mindestens einen Filter umfassen, der eingerichtet ist, mindestens einen Lichtstrahl abzulenken und/oder in seiner Farbe und/oder seiner Intensität zu beeinflussen oder ganz oder teilweise zurück in die Reflexionseinrichtung zu reflektieren. So kann in der Reflexionseinrichtung im Bereich der Austrittsausnehmung eine Glasplatte vorgesehen sein, die die austretenden Reflexionslichtstrahlen teilweise zurück in die Reflexionseinrichtung reflektieren. Des Weiteren können Farbfilter, Sperrfilter oder ähnliche bewegliche oder fest integrierte Lichtbeeinflussungselemente vorgesehen sein, um einzelne Lichtstrahlen oder Bereiche zu- oder abzuschalten, abzuschwächen oder deren Farbe zu verändern.

In einer vorteilhaften Weiterbildung kann die zumindest eine Lichtquelle zumindest zwei Primärlichtstrahlen entlang verschiedener Primärlichtstrahlachsen erzeugen, wobei zur Erzeugung einer dreidimensionalen Wirkung die Primärlichtstrahlen in verschiedene Polarisationsebenen polarisiert sind oder abwechselnd ein- und ausschaltbar sind, so dass ein Betrachter mittels einer Polarisationsbrille oder einer Shutterbrille einen dreidimensionalen Tiefeneffekt des Sternenhimmels wahrnehmen kann. So können zwei oder mehrere Laserlichtquellen mit verschiedenartig polarisiertem Licht zwei oder mehrere übereinander geblendete Sternenhimmel darstellen. Durch eine Polarisationsbrille werden die beiden Sternenhimmelbilder den beiden Augen eines Betrachters getrennt zugeführt, so dass sich ein räumlicher Tiefeneindruck ergibt. Alternativ können durch ein schnelles abwechselndes An- und Abschalten der zumindest beiden Primärlichtstrahlen und einer Shutterbrille, die synchron zum Schalten der Primärlichtstrahlen die sich abwechselnd ergebenden Sternenhimmel dem jeweils rechten bzw. linken Augen des Betrachters zuführen, ein Tiefeneindruck erreicht werden. Hierdurch wird die visuelle Darstellung des Sternenhimmels mit einem stereoskopischen Effekt eindrucksvoller, als eine einfache zweidimensionale Darstellung, und es kann ein Tiefeneindruck erzeugt werden.

In einer vorteilhaften Weiterentwicklung kann eine Steuereinrichtung vorgesehen sein, die eingerichtet ist, Farbe, Intensität, Lage und/oder Anzahl der Primärlichtstrahlen der zumindest einen Lichtquelle und/oder Ausrichtung der Teilreflexionselemente der zumindest einen Reflexionseinrichtung oder der Reflexionseinrichtung insgesamt zu steuern, wobei die Steuereinrichtung eingerichtet ist, eine Steuerung auf Basis von Audiosignalen vorzunehmen. Somit kann eine Animation der Leuchtstärke, der Sternenposition, der Farbdarstellung oder anderer Aspekte des Sternenhimmels beispielsweise basierend auf einer Frequenzanalyse oder einer Amplitudenanalyse von Audiosignalen vorgenommen werden, um eine harmonische Taktung des Sternenhimmels gemäß einer Musikdarstellung variieren zu lassen. Dies kann insbesondere im Bereich von Wellnesslandschaften eingesetzt werden, um eine harmonische Grundstimmung zu erzeugen. Insbesondere kann die Darstellung eines Kometenablaufs oder die Variation der Farbe oder Überblendung von zwei oder mehreren Reflexionseinrichtungsdarstellungen entsprechend eines Frequenzspektrums oder Amplitudenspektrums der Musikdarstellung gewählt werden, um einen harmonischen Gleichklang von Illumination und Musikwiedergabe zu erreichen.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: mehrere Darstellungen von aus dem Stand der Technik bekannten Reflexions- und Teilreflexionselementen;
- **Fig. 2**: eine schematische Darstellung eines ersten Ausführungsbeispiels der Erfindung;
- **Fig. 3**: in einer schematischen Darstellung ein zweites Ausführungsbeispiel einer erfindungsgemäßen Vorrichtung;
- **Fig. 4**: eine Gesamtdarstellung des in Fig. 3 dargestellten Ausführungsbeispiels;
- **Fig. 5**: ein weiteres Ausführungsbeispiel einer erfindungsgemäßen Vorrichtung;
- **Fig. 6**: ein weiteres Ausführungsbeispiel einer erfindungsgemäßen Vorrichtung;
- **Fig. 7**: ein weiteres Ausführungsbeispiel einer erfindungsgemäßen Vorrichtung;
- **Fig. 8**: ein weiteres Ausführungsbeispiel einer erfindungsgemäßen Vorrichtung;
- **Fig. 9**: in einer perspektivischen Darstellung ein weiteres Ausführungsbeispiel einer erfindungsgemäßen Vorrichtung;
- **Fig. 10**: in perspektivischen Darstellungen mehrere Ausführungsformen von Reflexionseinrichtungen von erfindungsgemäßen Vorrichtungen;
- **Fig. 11**: Darstellung eines künstlichen Sternenhimmels durch ein Ausführungsbeispiel der Erfindung.

In den Figuren sind gleiche oder gleichartige Komponenten mit gleichen Bezugszeichen beziffert.

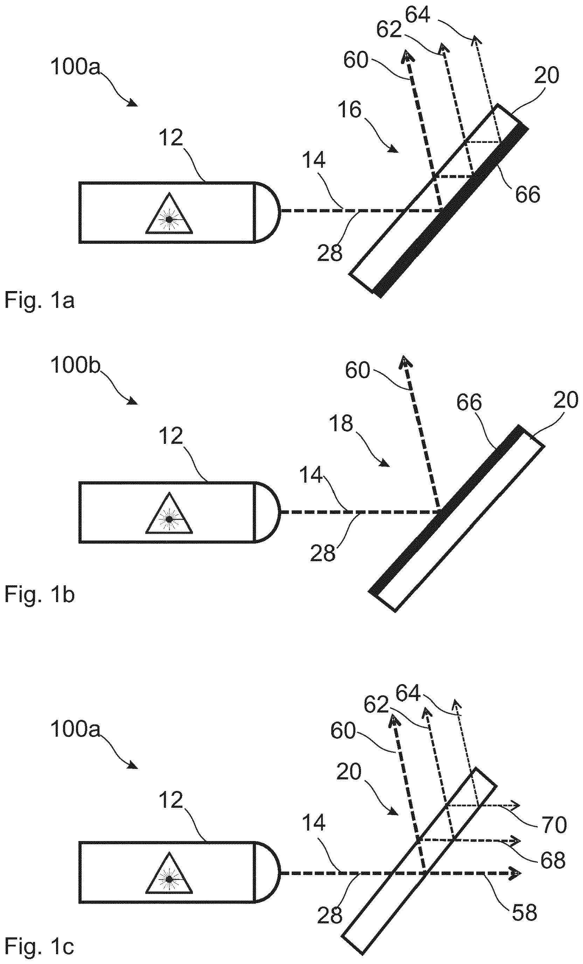

In der Fig. 1 sind schematisch drei Beispiele von Lichtpunkte-Erzeugungsvorrichtungen aus dem Stand der Technik dargestellt. So zeigt die Fig. 1a eine erste Lichtpunkte-Erzeugungsvorrichtung 100, die eine RGB-Laserlichtquelle 42 umfasst, die einen Primärlichtstrahl 14 entlang einer Primärlichtstrahlachse 28 aussendet. Brechungseffekte werden in dieser Darstellung zur Vereinfachung vernachlässigt. Der Primärlichtstrahl 14 dringt in eine Glasplatte 20 ein, die rückseitig auf der von der Lichtquelle 12 entfernten Seite mit einer Spiegelschicht beschichtet ist, und somit einen rückwärtig beschichteten Spiegel 16 darstellt. Das Licht wird an der Spiegelschicht 16 reflektiert, und als Primärreflexionsstrahl 60 entsprechend dem Reflexionsgesetz, Einfallswinkel gleich Ausfallswinkel, reflektiert. Im Inneren der Glasplatte 20 wird ein Teil des Lichtstrahls wiederum an der Oberfläche reflektiert, auf die Spiegelschicht geleitet, dort wieder reflektiert und als Sekundärreflexionslichtstrahl 62 abgestrahlt. Ein weiterer Teil dieses Lichts wird ebenfalls wieder an der Glasoberfläche reflektiert, an der Spiegelschicht reflektiert und als Tertiärreflexionsstrahl 64 abgestrahlt. Mittels eines Spiegels 16 mit rückwärtiger Spiegelschicht wird aus einem Primärlichtstrahl 14 eine Vielzahl von Reflexionslichtstrahlen (Primär-, Sekundär- und Tertiärlichtstrahlen) 60, 62, 64, die parallel in dieselbe Richtung abstrahlen, und die insbesondere auch durch Brechungseffekte aus einem Weißlichtstrahl einen multichromatischen und verschwommenen streifenförmigen Lichtpunkt erscheinen lassen. Eine derartige Anordnung ist für die Darstellung einzelner scharf fokussierter Lichtpunkte Reflexionsfläche ungeeignet.

In der Fig. 1b ist eine Alternative einer Lichtpunkte-Erzeugungsvorrichtung zur Fig. 1a dargestellt. Hierzu wird ein Laserspiegel mit einer vorderseitigen Spiegelbeschichtung 18 eingesetzt, so dass bereits auf der vorderen Oberfläche eine Vollreflexion des Primärlichtstrahls 14 bewirkt wird. Hierdurch wird ein einzelner Reflexionslichtstrahl 60 ausgesendet, der auf der Metallbeschichtung 66 auf der Vorderseite einer Glasplatte 20 des Laserspiegels 18 abgestrahlt wird. Es können allerdings keine hohe Anzahl von Lichtpunkten dargestellt werden.

In der Fig. 1c schließlich wird anstelle eines vorder- und rückseitig beschichteten Spiegels eine Glasplatte 20 mit einer Dicke >1.000 µm eingesetzt, die, wie in der Fig. 1a, eine Vielzahl von Reflexionslichtstrahlen, umfassend Primär-, Sekundär- und Tertiärreflexionsstrahlen 60, 62 und 64, abstrahlt, und des Weiteren im Gegensatz zu den in Fig. 1a und Fig. 1b eingesetzten Spiegelelementen einen Durchgangslichtstrahl 58 des Primärlichtstrahls sowie Sekundär- und Tertiärdurchgangslichtstrahlen 68 und 70 passieren lässt. Durch den Einsatz einer derartig dicken Glasplatte 20 wird eine Vielzahl von streifenförmigen und Lichtpunkten 60, 62, 64 und parallelen Durchgangslichtstrahlen 58, 68, 70 erzeugt, so dass aufgrund der Brechungswirkung bei multichromatischen Lichtstrahlen verwaschene und unsaubere Darstellungen eines Sternenhimmels erreicht werden, die in keinster Weise einen Betrachter eine naturgetreue Darstellung eines Sternenhimmels vermitteln.

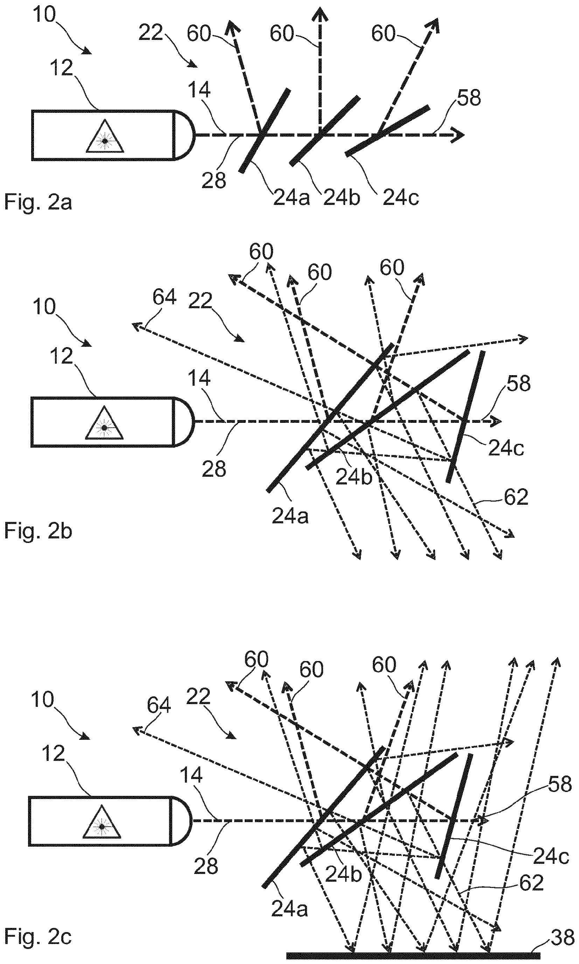

In der Fig. 2 sind in den Teilbildern Fig. 2a, 2b und 2c ein erstes Ausführungsbeispiels 10 einer erfindungsgemäßen Darstellungsvorrichtung für einen künstlichen Sternenhimmel 110 gezeigt, wobei in Fig. 2a die Erzeugung von Primärlichtstrahlen 60, in der Fig. 2b die Erzeugung von Sekundär- und Tertiärlichtstrahlen 62, 64 sowie in Fig. 2c eine Verbesserung der Reflexionswirkung der Reflexionseinrichtung 22 mittels eines Spiegelgrundfläche 38 dargestellt ist. Das Ausführungsbeispiel 10 der Fig. 2 umfasst eine RGB-Laserlichtquelle 12, die einen Primärlichtstrahl 14 entlang einer Primärstrahlachse 28 aussendet. Drei hintereinander angeordnete Teilreflexionselemente 24a, 24b und 24c, die beispielsweise aus 150 µm bis 180 µm dünnen Teilreflexionselemente, beispielsweise dünne Glasplättchen aufgebaut sein können, sind in verschiedenen Neigungswinkeln gegenüber der Primärlichtstrahlachse 28 hintereinander aufgestellt. Der Primärlichtstrahl 14 durchdringt alle drei Teilreflexionselemente 24, wobei beim Auftreffen auf die Oberfläche jedes einzelnen Teilreflexionselements 24 ein Primärreflexionsstrahl 60 in Richtung einer Projektionsfläche 72 abgestrahlt wird. Da die einzelnen Teilreflexionselemente 24 unterschiedliche Winkel gegenüber der Primärlichtstrahlachse 28 aufweisen, werden die einzelnen Reflexionslichtstrahlen 60 in unterschiedliche Richtungen auf die Projektionsfläche72 abgestrahlt. In der Fig. 2b sind neben den Primärreflexionslichtstrahlen 60 auch Sekundär- und Tertiärreflexionsstrahlen 62 und 64 dargestellt, die dadurch zustande kommen, dass ein Teil des an einem Teilreflexionselement reflektierten Lichtstrahls auf eine Rückseite eines vorgelagerten Teilreflexionselements 24 trifft, dort wieder reflektiert wird, und wiederum an dem nachgelagerten Teilreflexionselement 24 in Richtung Projektionsfläche 72 reflektiert wird. Dadurch entsteht eine hohe Anzahl von sekundär und tertiär reflektierten Lichtstrahlen 62, 64, die sowohl in Richtung der Projektionsfläche 72 als auch in andere Richtungen abgestrahlt werden. Zur Erhöhung der Intensität kann eine Spiegelgrundfläche 38 auf einer Unterseite der Reflexionseinrichtung 22 angeordnet werden, die die Reflexionslichtstrahlen, die auf die Unterseite abgestrahlt werden, wiederum nach oben auf die Projektionsfläche abstrahlen können. Hierdurch werden die Intensität und die Anzahl der reflektierten Lichtstrahlen 60, 62, 64 deutlich erhöht. Die Reflexionsgrundfläche 38 besteht beispielsweise aus einem oder mehreren Laserspiegeln, die eine vorderseitige metallisierte, reflektierende Oberfläche aufweist.

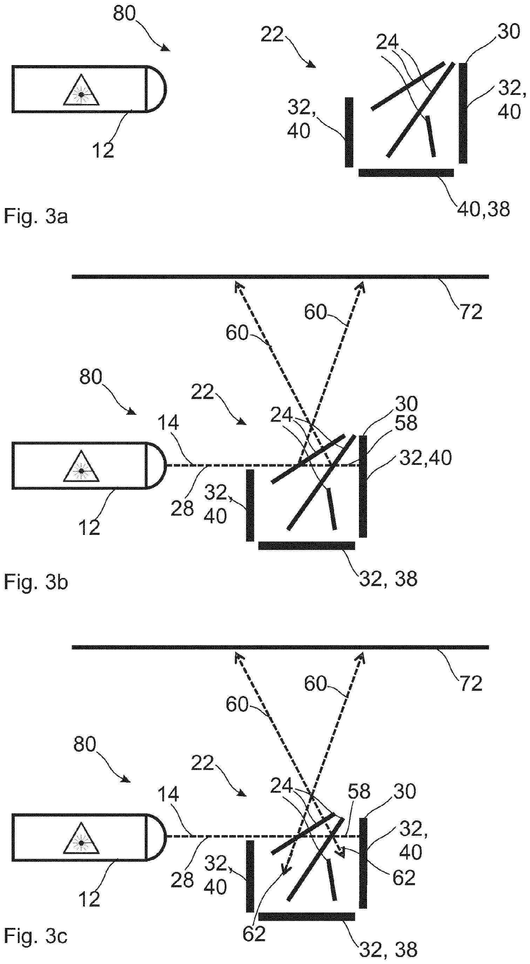

In der Fig. 3 wird in ähnlicher Weise wie in der Fig. 2 ein weiteres Ausführungsbeispiel 80 einer Darstellungsvorrichtung schematisch gezeigt. Die Darstellungsvorrichtung 80 umfasst eine RGB-Laserlichtquelle 42 und einer Reflexionseinrichtung 22, die drei Teilreflexionselemente 24 in Form von dünnen transparenten Glas- oder Kunststoffplättchen umfasst, die hintereinander entlang einer Primärlichtstrahlachse 28 angeordnet sind, sowie einer Gehäusewandung 30, die in Richtung der Projektionsfläche 72 offen, jedoch in allen anderen Richtungen mittels Spiegelelementen 32 geschlossen ist. Die Spiegelelemente 32 umfassen eine Spiegelgrundfläche 38, auf der beispielsweise die Teilreflexionselemente 24 befestigt sein können, sowie Seiten-, Vorder- und Rückspiegelelemente 40, die allesamt die Aufgabe haben, reflektiertes Licht in die Teilreflexionselemente 24 zurückzulenken, so dass es nach mehrfacher Reflexion in Richtung Projektionsfläche 72 abgelenkt werden kann.

In der Fig. 3a ist eine Grunddarstellung von Lichtquelle 12 und Reflexionseinrichtung 80 dargestellt. In der Fig. 3b ist das Aussenden eines Primärlichtstrahls 14 entlang einer Primärlichtstrahlachse 28 dargestellt, sowie die Primärreflexionslichtstrahlen 60, die von einem ersten und zweiten Teilreflexionselement 24a, 24b bewirkt werden. In der Fig. 3c sind des Weiteren weitere Reflexionslichtstrahlen 62 dargestellt, die in das Innere des Gehäuses der Reflexionseinrichtung 22 dringen, und dort von den Gehäusespiegelelementen 32 reflektiert und beispielsweise von einem unten liegenden Teilreflexionselement 24c abgelenkt werden und somit weitere Lichtpunkte auf der Projektionsfläche 70 darstellen können.

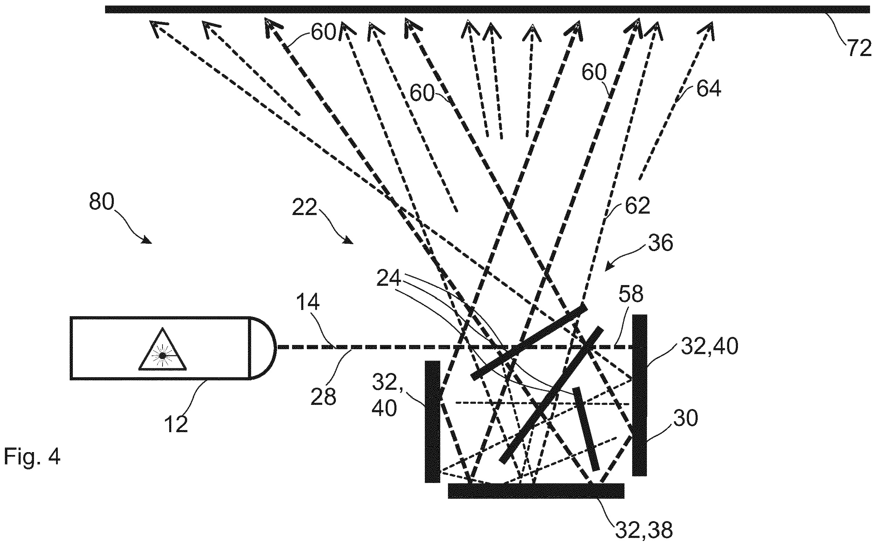

In der Fig. 4 ist in einer Gesamtschau der Fig. 3 die Sternenhimmel-Erzeugungsvorrichtung 80 mit einer Vielzahl von Reflexionslichtstrahlen höherer Ordnung 60, 62, 64 dargestellt, die einen künstlichen Sternenhimmel 110 auf der Projektionsfläche 72 darstellen.

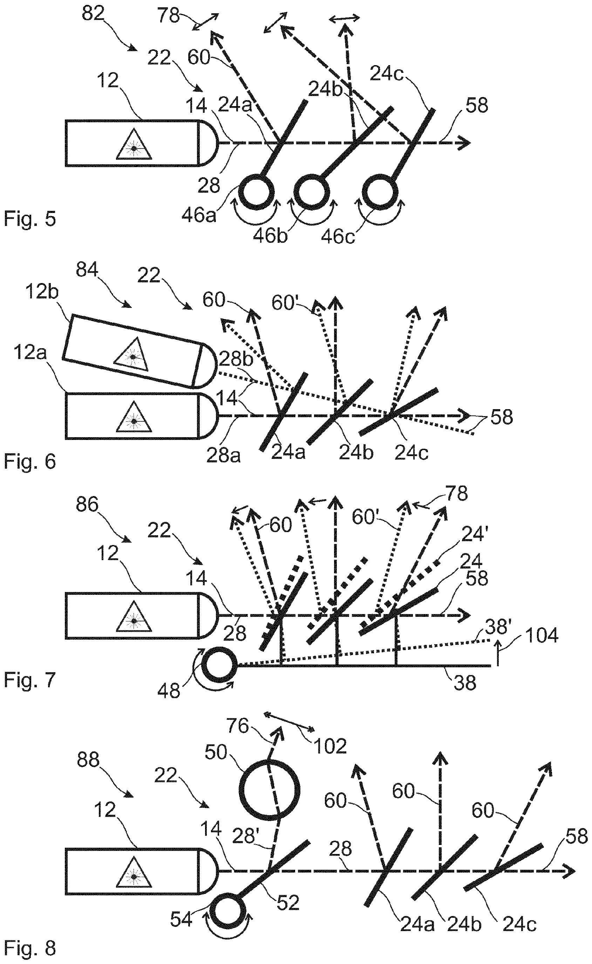

In den weiteren Fig. 5 bis 8 sind schematisch weitere Ausführungsbeispiele von Sternenhimmel-Erzeugungsvorrichtungen 82, 84, 86 und 88 gezeigt. In der Fig. 5 ist eine Darstellungsvorrichtung 82 skizziert, die sich grundsätzlich an der Konfiguration der Fig. 2a anlehnt. Die einzelnen Teilreflexionselemente 24a, 24b und 24c lassen sich mittels eines piezoelektrischen oder motorischen Stellelements 46a, 46b und 46c im Anstellwinkel gegenüber der Primärstrahllichtachse 28 verstellen, so dass die Reflexionslichtstrahlen 60 individuell bewegt und somit einen Bewegungslauf in einer Lichtpunkt-Bewegungsrichtung 78 entlang einer Projektionsfläche 72 nehmen können. Somit können einzelne Sterne oder Sterngruppen innerhalb des Sternenhimmels gegeneinander bewegt werden, um einen Animation, beispielsweise der Effekt der Erddrehung oder der voranschreitenden Tages- und Nachtzeit, darstellen zu können.

In der Fig. 6 ist ein weiteres Ausführungsbeispiel 84 dargestellt, das zwei Lichtquellen 12a und 12b umfasst, die in verschiedenen Winkel in die Reflexionseinrichtung 22 Primärlichtstrahlen 14 abstrahlen. Demgemäß sind zwei gegeneinander abgewinkelte Primärlichtstrahlachsen 28a und 28b vorgesehen, die in verschiedenen Winkeln auf die Teilreflexionselemente 24a bis 24c treffen, und somit verschiedene Primärreflexionslichtstrahlen 60 und 60' erzeugen können. Beispielsweise ist denkbar, dass die einzelne Lichtquelle 12 in ihrer Ausrichtung gegenüber der Reflexionseinrichtung 22 veränderbar ist, oder zwei oder mehrere Lichtquellen 12, die beispielsweise parallele Strahlachsen 28 oder gegeneinander abgewinkelte Strahlachsen 28 aufweisen, in die Reflexionseinrichtung 22 einstrahlen können, um den gesamten Sternenhimmel animiert auf der Projektionsfläche 72 darstellen zu können. Die beiden Primärlichtstrahlen 14 können unterschiedlich polarisiert sein, oder abwechselnd in hoher Frequenz z.B. 30-100 Hz alternierend ein- und ausgeschaltet werden, so dass zwei verschiedene Sternenhimmelkonfigurationen 110 auf einer Projektionsfläche 72 dargestellt werden. Die beiden Sternenhimmelkonfigurationen können durch eine Polarisationsbrille oder eine Shutterbrille einem Beobachter als dreidimensionale Sternenbilddarstellung dargestellt werden, um einen räumlichen Eindruck zu erreichen. Hierzu kann auf bewährte 3D-Shuttertechnik oder 3D-Polarisationstechnik zurückgegriffen werden.

Des Weiteren ist in der Fig. 7 ein weiteres Ausführungsbeispiel 86 dargestellt, in dem die Reflexionseinrichtung 22 eine Spiegelgrundfläche 38 aufweist, auf der die einzelnen Teilreflexionselemente 24 angeordnet sind, beispielsweise mittels Stützstreben oder mittels Klebeverbindung auf der Spiegelgrundfläche 38 befestigt sind. Die Spiegelgrundfläche 38 ist in ihrer Neigung gegenüber der Primärlichtstrahlachse 28 durch ein Aktuatorelement 48, beispielsweise ein piezomechanisches oder elektromotorisches Verstellelement, veränderbar, so dass wiederum die Primär- und auch weiteren Reflexionslichtstrahlen 28, 60 an verschiedene Positionen 60, 60' bewegbar sind, so dass die gesamte Sternenhimmeldarstellung eine Bewegungsrichtung 78 nehmen kann, so dass Lichtpunkte sich entlang dieser Bewegungsrichtung 78 über die Projektionsfläche 72 bewegen können.

Des Weiteren ist in Fig. 8 ein weiteres Ausführungsbeispiel 88 einer Sternenhimmel-Erzeugungsvorrichtung dargestellt, das grundsätzlich auf dem in Fig. 2a dargestellte Grundausführungsbeispiel beruht. Durch ein Strahlteilerelement 52, beispielsweise einen Teilerspiegel, wird ein Teil des Primärlichtstrahls 14 entlang der Primärlichtstrahlachse 28 in eine weitere, abgewinkelte Primärlichtstrahlachse 28' aufgeteilt, so dass der Primärlichtstrahl 14 zum einen durch die Teilreflexionselemente 24 zur Darstellung von einzelnen Lichtpunkten fällt, zum anderen entlang einer Primärlichtstrahlachse 28' auf einen transparenten Brechungskörper 50, insbesondere auf eine Zylinderwandung rechtwinklig zur Zylinderachse eines Rundzylinders des Brechungskörpers 50 fällt, darin mittels Brechung abgelenkt wird, um einen aufgeweiteten Lichtstrahl zur Darstellung eines Kometenflugs 76 darzustellen, der sich entlang einer Kometen-Bewegungsrichtung 102 auf der Projektionsfläche 72 bewegt. Diese künstlich dargestellte Kometenflugbahn 76 bewegt sich entsprechend einem Verstellwinkel des Strahlteilers 52, der beispielsweise durch einen Teilerspiegel-Aktuator 54 in seiner Verstellachse gegenüber der Primärlichtstrahlachse 28 verstellbar ist, entlang einer Kometen-Bewegungsrichtung 102. Die Ausrichtung der Primärlichtstrahlachse 28' und somit der Auftreffpunkt des Primärlichtstrahls auf dem Brechungskörper 50 kann durch den elektromechanischen Aktuator 54 verändert werden, so dass die Kometenflugbahn 102 auf der Projektionsfläche 72 wandert, um einen künstlich animierten Kometenflug 76 durch den künstlichen Sternenhimmel darzustellen. Hierzu kann ein Teil des Primärlichtstrahls der Lichtquelle 12 eingesetzt werden, oder eine weitere Primärlichtstrahlquelle 12 zur Darstellung des Kometenflugs 76 eingesetzt werden.

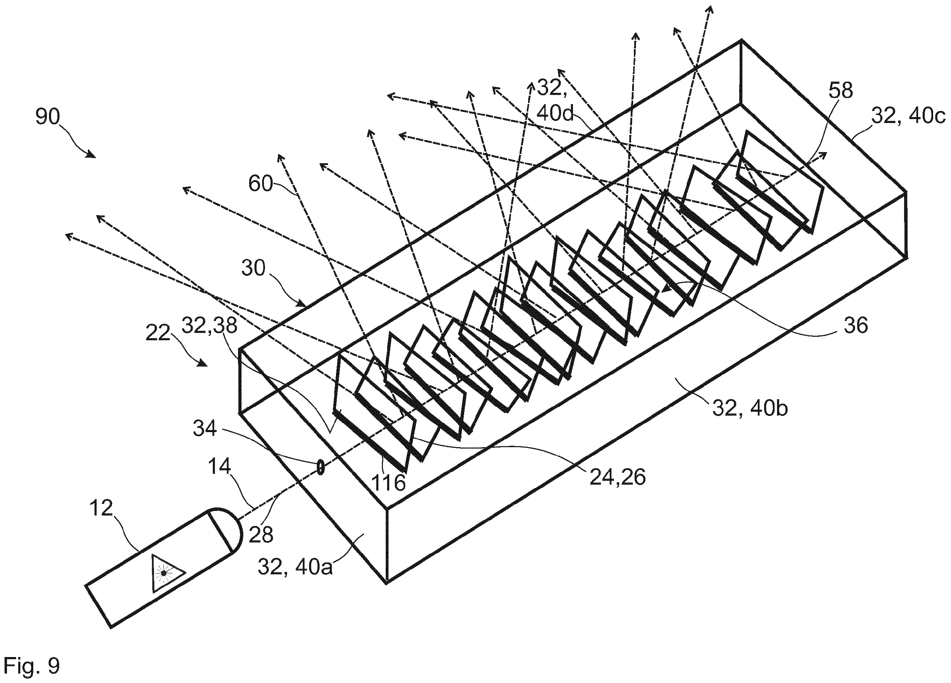

In der Fig. 9 ist perspektivisch ein Ausführungsbeispiel 90 einer künstlichen Sternenhimmel-Erzeugungsvorrichtung dargestellt. Die Darstellungsvorrichtung 90 umfasst einen Weißlichtlaser, der einen Weißlichtstrahl 14 entlang einer Primärlichtstrahlachse 28 ausgibt. Die Reflexionseinrichtung 22 umfasst beispielsweise ein schachtelförmiges, nach oben geöffnetes Gehäuse 30, umfassend vier seitlichen Umfangsspiegel 40a bis 40d und eine Spiegelgrundfläche 38 aus Gehäusespiegelelementen 32. Die Gehäusewandung 30 ist nach oben in Richtung einer Projektionsfläche 72 geöffnet. Auf der Spiegelgrundfläche 38 sind mittels Klebestoff 116 eine Vielzahl von hintereinander angeordneten Teilreflexionselementen 24, jeweils aus Glasplättchen 26 einer Stärke von 200 µm oder weniger, angeordnet, die in verschiedene Richtung ausgerichtet sind. Die einzelnen Teilreflexionsglasplättchen 26 sind in ihrem Winkel und ihrer Ausrichtung sowohl in der XY-Ebene der Spiegelgrundfläche 38 als auch im Neigungswinkel gegenüber der Normalen der Spiegelgrundfläche 38 und gegenüber der Primärlichtstrahlachse 28 voneinander verschieden und werfen somit Primärlichtstrahlen 60 in unterschiedlichste Richtungen auf die Projektionsfläche 72. Auf die Darstellung von mehrfach reflektierten Sekundär-, Tertiär- und Reflexionslichtstrahlen höherer Ordnung wird verzichtet. Durch das im Inneren verspiegelte Gehäuse 30 der Reflexionseinrichtung 90 werden alle Lichtstrahlen in verschiedenen Wegen auf die Projektionsfläche 72 abgestrahlt, so dass eine Vielzahl von Sternenpunkten dar gestellt werden kann, wobei unterschiedliche Intensitäten einen räumlichen dreidimensionalen Eindruck ermöglichen. Durch ultradünne teilreflektierende oder klare lichtdurchlässige Gläser, Folien oder Scheiben können Mehrfachreflexionen vermieden werden und unerwünschte Brechungs- und Prismeneffekte, die das weiße Licht in einzelne Spektrallinien zerlegen würden, unterdrückt werden.

Die Teilreflexionselemente 24 müssen nicht zwingend in der Primärlichtstrahlachse 28 liegen, sondern können auch unterhalb oder oberhalb der Primärlichtstrahlachse 28 in Bezug auf die Spiegelgrundfläche 38 angeordnet sein, und bereits reflektierte Lichtstrahlen weiter reflektieren, wie dies in den Figs. 3 und 4 angedeutet ist. Die Gehäusespiegelelemente 32 vervielfachen den Effekt und lenken die Sternenhimmel-Projektion 110 in eine gewünschte Richtung und erhöhen dadurch die Intensität und den Wirkungsgrad der Reflexionseinrichtung 22.

Die wesentliche Komponente der Darstellungsvorrichtung 100 ist eine Licht- oder Laserquelle 12 mit einem fokussierten, insbesondere kollimierten Primärlichtstrahl 14 aus einem multichromatischen oder weißen Licht, teilreflektierende, extrem dünne, optische, transparente Teilreflexionselemente 24 sowie Spiegelelemente 32 des Gehäuses 30, die Reflexionslichtstrahlen bündeln und vervielfachen sowie eine Projektionsfläche 72, auf der der künstliche Sternenhimmel 110 dargestellt werden kann.

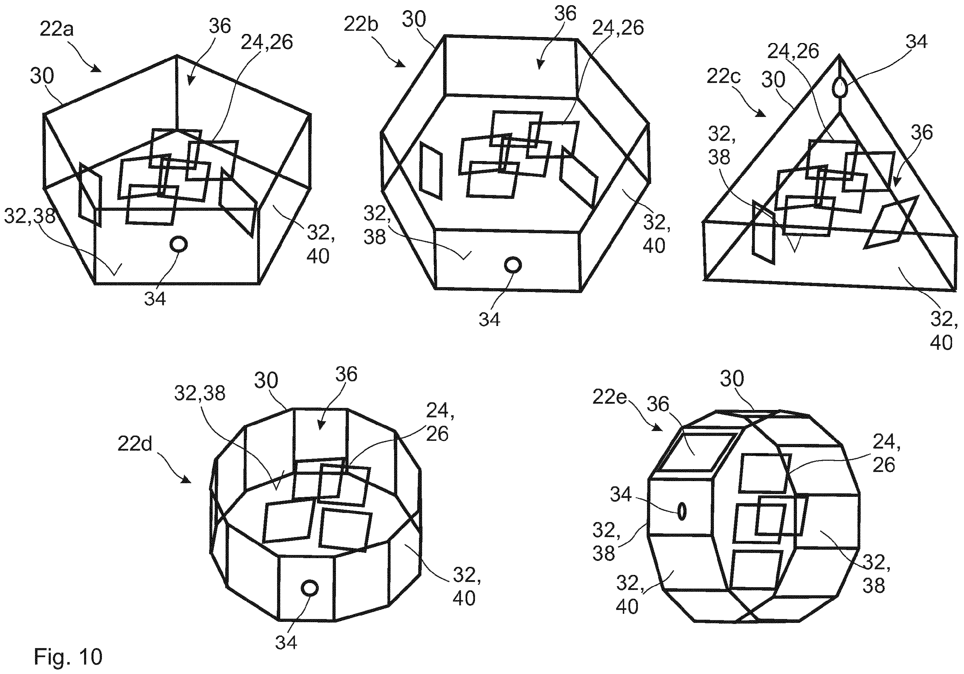

In verschiedenen perspektivischen Darstellungen von Reflexionseinrichtungen 22a bis 22e der Fig. 10 sind unterschiedliche Geometrien von prismenförmigen Gehäusen 30 dargestellt. So zeigt eine Darstellung eine Reflexionseinrichtung 22a mit einer fünfeckigen Spiegelgrundfläche 38 und Begrenzungsspiegelelementen 40. Auf der Spiegelgrundfläche 38 sind eine Vielzahl von Teilreflexionselemente 24 als Glasplättchen 26 angeordnet, die einen durch eine Eintrittsöffnung 34 einfallenden Primlichtstrahl in unterschiedliche Richtungen und vornehmlich in Richtung der Austrittsausnehmung 36 reflektieren können. Die Reflexionseinrichtung 22b weist eine sechseckige Spiegelgrundfläche 38 auf, und die Reflexionseinrichtung 22c kann platzsparend eine dreieckige Grundfläche aufweisen. Die Eintrittsöffnung 34 kann in einer Ecke des Dreiecksprismas angeordnet sein. Die Reflexionseinrichtung 22d hat eine vieleckige Spiegelgrundfläche 38 und eine Vielzahl aneinander grenzender planarer Begrenzungsspiegelelemente 40. In der Ausführungsform einer Reflexionseinrichtung 22e sind angelehnt an das Gehäuse 30 der Reflexionseinrichtung 22d zwei parallele Spiegelgrundflächen 38 vorgesehen, wobei das reflektierte Licht aus einer Austrittsausnehmung 36 eines Begrenzungsspiegelelements 40 austritt.

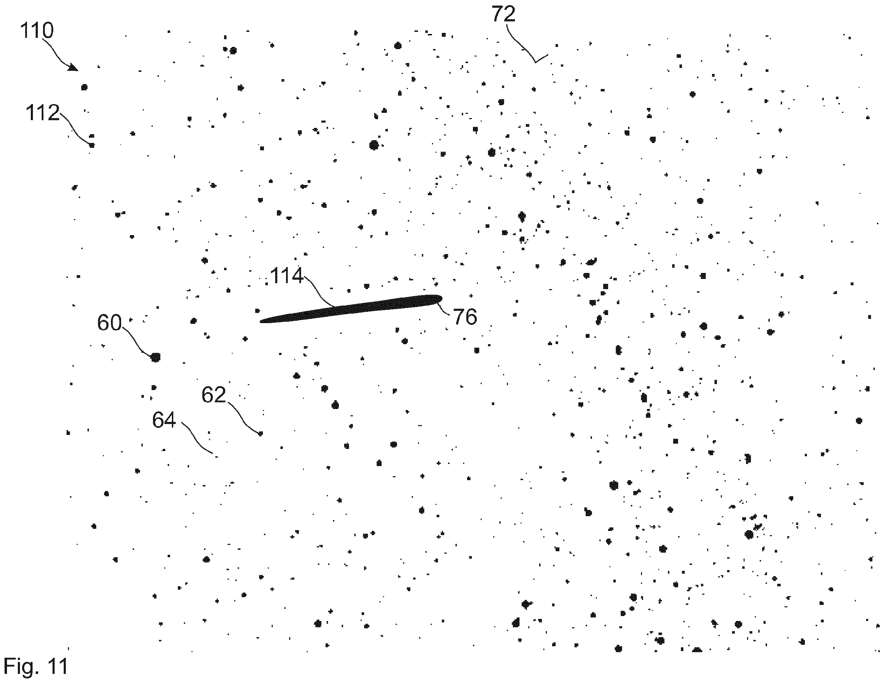

Schließlich zeigt die Fig. 11 die Darstellung eines künstlichen Sternenhimmels 110, wie er durch ein Ausführungsbeispiel einer Darstellungsvorrichtung 90 beispielsweise auf der Decke eines Zimmers, einer Leinwand oder einer Halle dargestellt werden kann. Der Sternenhimmel 110 umfasst größere Sternendarstellungen 112, die durch Primärlichtstrahlen 60 erzeugt werden. Des Weiteren sind kleinere Sterndarstellungen zu sehen, die durch Sekundär- und Tertiärreflexionsstrahlen 62 und 64 erzeugt werden. Eine Kometendarstellung 76 kann erreicht werden, indem ein Laserstrahl durch einen Reflexions- oder Brechungskörper gelenkt wird, und die Achse des Laserstrahls gegenüber dem Reflexions- oder Brechungskörper relativ verändert wird, so dass der langgezogene Strahl über der Projektionsfläche 72 entlang einer Kometenflugbahn 102 wandern kann. Hierdurch kann ein Komet 114 durch den Sternenhimmel 110 animiert bewegt werden, um eine höhere Lebendigkeit der Sternenhimmeldarstellung zu erreichen.

Durch eine erfindungsgemäße Vorrichtung wird eine kostengünstige und einfache Möglichkeit dargestellt, einen künstlichen Sternenhimmel 110 mit hoher Brillanz, Intensität und einem dreidimensionalen Tiefeneffekt auf beliebigen Projektionsflächen 72 darstellen zu können. Die Vorrichtung verzichtet auf Linsen oder Prismen und vermeidet Lichtbrechungseffekte zur Sternendarstellung, so dass weder Regenbogeneffekte noch Fokussierungsprobleme auftreten. Zur Erhöhung der Dichtezahl von Sterndarstellungen können mehrere Vorrichtungen parallel betrieben werden, oder eine einzelne Lichtquelle einen Lichtstrahl in mehrere Reflexionseinrichtungen aussenden.. Die Anzahl und geeignete Anordnung von Teilreflexionselementen in einer Reflexionseinrichtung in Verbindung mit der geeigneten Anordnung der umlaufenden Spiegeln und den damit verbundenen Mehrfachreflexionen bestimmt die Dichte und die Positionen der Sternenpunkte auf einer Projektionsfläche.
- 10: Sternenhimmel-Erzeugungsvorrichtung
- 12: Lichtquelle
- 14: Primärlichtstrahl
- 16: Spiegel mit rückwärtiger Spiegelbeschichtung
- 18: Laserspiegel mit vorderseitiger Spiegelbeschichtung
- 20: Glasplatte mit Dicke >1000µm
- 22: Reflexionseinrichtung
- 24: Teilreflexionselement
- 26: Glasplättchen
- 28: Primärlichtstrahlachse
- 30: Teilgeöffnete Gehäusewandung
- 32: Gehäusespiegelelement
- 34: Eintrittsöffnung
- 36: Austrittsausnehmung
- 38: Spiegelgrundfläche
- 40: Begrenzungsspiegelelement
- 42: RGB-Laser
- 44: Zweiter Primärlichtstrahl
- 46: Teilreflexionselement-Stellelement
- 48: Aktuatorelement
- 50: Brechungskörper
- 52: Strahlteiler / Teilerspiegel
- 54: Teilerspiegel-Aktuator
- 56: Projektionsfläche
- 58: Durchgangsstrahl
- 60: Primärreflexionsstrahl
- 62: Sekundärreflexionsstrahl
- 64: Tertiärreflexionsstrahl
- 66: Metallbeschichtung
- 68: Sekundärdurchgangsstrahl
- 70: Tertiärdurchgangsstrahl
- 72: Projektionsfläche
- 74: Künstlicher Sternenhimmel
- 76: Künstliche Kometenflugdarstellung
- 78: Lichtpunkt Bewegungsrichtung
- 80: Sternenhimmel-Erzeugungsvorrichtung
- 82: Sternenhimmel-Erzeugungsvorrichtung
- 84: Sternenhimmel-Erzeugungsvorrichtung
- 86: Sternenhimmel-Erzeugungsvorrichtung
- 88: Sternenhimmel-Erzeugungsvorrichtung
- 90: Sternenhimmel-Erzeugungsvorrichtung
- 100: Lichtpunkte-Erzeugungsvorrichtung
- 102: Kometen-Bewegungsrichtung
- 104: Spiegelgrundfläche-Bewegungsrichtung
- 110: Künstlicher Sternenhimmel
- 112: Stern
- 114: Komet
- 116: Klebstoffbefestigung

## Patentansprüche

1. Vorrichtung (10, 80, 82, 84, 86, 88, 90) zur Erzeugung eines künstlichen weißen oder mehrfarbigen Sternenhimmels (110) umfassend zumindest eine Lichtquelle (12) zur Aussendung zumindest eines polychromatischen oder weißen Primärlichtstrahls (14) und zumindest eine Reflexionseinrichtung (22) zur Reflexion des Primärlichtstrahls (14) in eine Mehrzahl von Reflexionslichtstrahlen, wobei die Reflexionseinrichtung (22) eine Mehrzahl von Teilreflexionselementen (24a, 24b, 24c) zur Aufteilung des Primärlichtstrahls (14) in zumindest zwei Teile umfasst, wobei ein erster Teil des Primärlichtstrahls (14) an einer ersten, der Lichtquelle (12) zugewandten Oberflächenseite des Teilreflexionselementes (24a, 24b, 24c) reflektiert wird und ein zweiter Teil des Primärlichtstrahls (14) ungehindert ein Teilreflexionselement (24a, 24b, 24c) passiert, und die Oberfläche jedes Teilreflexionselements (24) in einem Winkel ungleich 90° gegenüber der Achse des Primärlichtstrahls (14) abgewinkelt ist, **dadurch gekennzeichnet, dass** jedes Teilreflexionselement (24) ein transparentes oder semitransparentes Kunststoff- oder Glasplättchen (26) umfasst, dessen Dicke zur Vermeidung von diffuser Streuung geringer als 1 mm ist, insbesondere geringer als 500 µm ist, bevorzugt 200 µm oder geringer ist, und eine Mehrzahl von Teilreflexionselementen (24a, 24b, 24c) entlang einer Primärlichtstrahlachse (28) in unterschiedlichen Winkeln zur Primärlichtstrahlachse (28) derart angeordnet sind, so dass Lichtstrahlen auf beliebige Stellen einer Projektionsfläche oder in Richtung weiterer Teilreflexionselemente (24a, 24b, 24c) ablenkbar sind, so dass es zu Mehrfachreflexionen mit einer zweiten, dritten oder höheren Ordnung an Mehrfachreflexionen kommt, und Reflexionslichtstrahlen mit unterschiedlichen Intensitäten auf eine Projektionsfläche (72) zur Darstellung des künstlichen Sternenhimmels (110) auftreffen.

2. Vorrichtung (10, 80, 82, 84, 86, 88, 90) nach Anspruch 1, **dadurch gekennzeichnet, dass** das Plättchen (26) mit einer teildurchlässigen dünnen metallischen oder dielektrischen Reflexionsschicht mit einer Dicke von geringer als 100nm, bevorzugt geringer als 50nm beschichtet ist.

3. Vorrichtung (10, 80, 82, 84, 86, 88, 90) nach einem der vorangegangenen Ansprüche, **dadurch gekennzeichnet, dass** die Reflexionseinrichtung (22) eine teilgeöffnete Gehäusewandung (30) aus Spiegelelementen (32) mit zumindest einer Eintrittsöffnung (34) zum Eintritt des Primärlichtstrahls (14) und zumindest einer Austrittsausnehmung (36) zum Austritt reflektierter Lichtstrahlen (60, 62, 64) aufweist, wobei das Teilreflexionselement (24) auf einer Spiegelgrundfläche (38) angeordnet ist und bevorzugt in zumindest einer weiteren, zur Spiegelgrundfläche (38) abgewinkelten Ebene von Begrenzungsspiegelelementen (40) umfasst ist.

4. Vorrichtung (10, 80, 82, 84, 86, 88, 90) nach einem der vorgenannten Ansprüche, **dadurch gekennzeichnet, dass** die Lichtquelle (12) zumindest einen Weißlicht-Laser, einen RGB-Laser und/oder einen Ein- oder Mehrfarb-Laser umfasst.

5. Vorrichtung (10, 80, 82, 84, 86, 88, 90) nach einem der vorgenannten Ansprüche, **dadurch gekennzeichnet, dass** die Anzahl von Primärlichtstrahlen (14a, 14b), die Achsrichtung (28) des Primärlichtstrahls (14), die Farbe und/oder die Intensität des Primärlichtstrahls (14) veränderbar ist.

6. Vorrichtung (10, 80, 82, 84, 86, 88, 90) nach einem der vorgenannten Ansprüche, **dadurch gekennzeichnet, dass** der Winkel der Oberfläche des zumindest einen Teilreflexionselementes (24) gegenüber dem Primärlichtstrahl (14) veränderbar ist, insbesondere durch ein mechanisches, elektrisches oder elektromechanisches Stellelement (46) veränderbar ist.

7. Vorrichtung (10, 80, 82, 84, 86, 88, 90) nach einem der vorgenannten Ansprüche, **dadurch gekennzeichnet, dass** der Ausrichtung der Reflexionseinrichtung (22) gegenüber der Primärstrahlachse (28) veränderbar, insbesondere mittels eines mechanischem, elektrischem oder elektromechanischem Aktuatorelements (48) veränderbar ist.

8. Vorrichtung (10, 80, 82, 84, 86, 88, 90) nach einem der vorgenannten Ansprüche, **dadurch gekennzeichnet, dass** ein Teil des Primärstrahls (14) oder ein weiterer Primärstrahl (14a, 14b) entlang einer lageveränderlichen Strahlachse (28') durch mindestens einen transparenten oder semitransparenten Brechungskörper (50) oder auf mindestens einen Reflexionskörper, insbesondere einen Zylinder, ein Ellipsoid oder eine Kugel gelenkt wird, oder ein lageveränderlicher Brechungs- oder Reflexionskörper durch eine Strahlachse (28') eines Teils des Primärstrahls (14) oder eines weiteren Primärstrahls (14a, 14b) bewegbar ist, um dem künstlichen Sternenhimmel (110) eine animierte Darstellung eines künstlichen Kometenflugs (76) zu überlagern.

9. Vorrichtung (10, 80, 82, 84, 86, 88, 90) nach einem der vorgenannten Ansprüche, **dadurch gekennzeichnet, dass** durch mindestens einer nicht beweglichen oder beweglichen Blende, mindestens einem Spiegel oder mindestens einem Filter mindestens ein Lichtstrahl (14, 58, 60, 62, 64) abgelenkt und/oder in seiner Farbe und/oder seiner Intensität beeinflusst oder ganz oder teilweise zurück in die Reflexionseinrichtung (22) reflektiert wird.

10. Vorrichtung (10, 80, 82, 84, 86, 88, 90) nach einem der vorgenannten Ansprüche, **dadurch gekennzeichnet, dass** die zumindest eine Lichtquelle (12) zumindest zwei Primärlichtstrahlen (14) entlang verschiedener Primärlichtstrahlachsen (28a, 28b) erzeugt, wobei zur Erzeugung einer dreidimensionalen Wirkung die Primärlichtstrahlen (14) in verschiedene Polarisationsebenen polarisiert sind oder abwechselnd ein- und ausschaltbar sind, so dass ein Betrachter mittels einer Polarisationsbrille oder einer Shutterbrille einen dreidimensionalen Tiefeneffekt des Sternenhimmels (110) wahrnehmen kann.

11. Vorrichtung (10, 80, 82, 84, 86, 88, 90) nach einem der vorgenannten Ansprüche, **dadurch gekennzeichnet, dass** eine Steuereinrichtung umfasst ist, die eingerichtet ist, Farbe, Intensität, Lage und/oder Anzahl der Primärlichtstrahlen (14) der zumindest einen Lichtquelle (12) und/oder Ausrichtung der Teilreflexionselemente (24) der zumindest einen Reflexionseinrichtung (22) zu steuern, wobei die Steuereinrichtung eingerichtet ist, eine Steuerung auf Basis von Audiosignalen vorzunehmen.

## Claims

1. Device (10, 80, 82, 84, 86, 88, 90) for producing an artificial white or multicoloured starry sky (110), comprising at least one light source (12) for emitting at least one polychromatic or white primary light beam (14) and at least one reflective apparatus (22) for reflecting the primary light beam (14) as a plurality of reflected light beams, the reflective apparatus (22) comprising a plurality of partially reflective elements (24a, 24b, 24c) for subdividing the primary light beam (14) into at least two parts, a first part of the primary light beam (14) being reflected at a first surface side, facing the light source (12), of the partially reflective element (24a, 24b, 24c) and a second part of the primary light beam (14) passing unimpeded through a partially reflective element (24a, 24b, 24c), and the surface of each partially reflective element (24) being angled at an angle other than 90° relative to the axis of the primary light beam (14), **characterised in that** each partially reflective element (24) comprises a transparent or semitransparent plastics or glass wafer (26), the thickness of which is less than 1 mm, in particular less than 500 µm, preferably 200 µm or less to avoid diffuse scattering, and a plurality of partially reflective elements (24a, 24b, 24c) are arranged along a primary light beam axis (28) at different angles to the primary light beam axis (28), in such a way that light beams are deflectable onto any desired points of a projection surface or towards further partially reflective elements (24a, 24b, 24c), such that interreflections arise, with a second, third or higher order of interreflections, and reflected light beams impinge with different intensities on a projection surface (72) to display the artificial starry sky (110).

2. Device (10, 80, 82, 84, 86, 88, 90) according to Claim 1, **characterised in that** the wafer (26) is coated with a partially transmissive thin metallic or dielectric reflective layer of a thickness of less than 100nm, preferably less than 50nm.

3. Device (10, 80, 82, 84, 86, 88, 90) according to one of the preceding claims, **characterised in that** the reflective apparatus (22) has a partially open housing wall (30) of mirror elements (32) with at least one entry orifice (34) for entry of the primary light beam (14) and at least one exit opening (36) for exit of reflected light beams (60, 62, 64), wherein the partially reflective element (24) is arranged on a mirror base (38) and is preferably enclosed in at least one further plane angled relative to the mirror base (38) by delimiting mirror elements (40).

4. Device (10, 80, 82, 84, 86, 88, 90) according to one of the above-mentioned claims, **characterised in that** the light source (12) comprises at least one white light laser, one RGB laser and/or one monochromatic or polychromatic laser.

5. Device (10, 80, 82, 84, 86, 88, 90) according to one of the above-mentioned claims, **characterised in that** the number of primary light beams (14a, 14b), the axial direction (28) of the primary light beam (14), the colour and/or the intensity of the primary light beam (14) are variable.

6. Device (10, 80, 82, 84, 86, 88, 90) according to one of the above-mentioned claims, **characterised in that** the angle of the surface of the at least one partially reflective element (24) relative to the primary light beam (14) is variable, in particular is variable by a mechanical, electrical or electromechanical adjusting element (46).

7. Device (10, 80, 82, 84, 86, 88, 90) according to one of the above-mentioned claims, **characterised in that** the orientation of the reflective apparatus (22) relative to the primary beam axis (28) is variable, in particular is variable by means of a mechanical, electrical or electromechanical actuator element (48).

8. Device (10, 80, 82, 84, 86, 88, 90) according to one of the above-mentioned claims, **characterised in that** part of the primary beam (14) or a further primary beam (14a, 14b) is directed along a beam axis (28') of variable position by at least one transparent or semitransparent refractive body (50) or onto at least one reflective body, in particular a cylinder, an ellipsoid or a sphere, or a refractive or reflective body of variable position is movable through a beam axis (28') of part of the primary beam (14) or of a further primary beam (14a, 14b), in order to overlay an animated display of an artificial comet flight (76) over the artificial starry sky (110).

9. Device (10, 80, 82, 84, 86, 88, 90) according to one of the above-mentioned claims, **characterised in that**, by means of at least one immobile or mobile diaphragm, at least one mirror or at least one filter, at least one light beam (14, 58, 60, 62, 64) is deflected and/or the colour and/or intensity thereof is influenced or it is reflected wholly or partly back into the reflective apparatus (22).

10. Device (10, 80, 82, 84, 86, 88, 90) according to one of the above-mentioned claims, **characterised in that** the at least one light source (12) generates at least two primary light beams (14) along different primary light beam axes (28a, 28b), wherein to produce a three-dimensional effect the primary light beams (14) are polarised into different polarisation planes or may be alternately switched on and off, such that an observer may perceive a three-dimensional depth effect of the starry sky (110) using polarisation glasses or active shutter glasses.

11. Device (10, 80, 82, 84, 86, 88, 90) according to one of the above-mentioned claims, **characterised in that** a control apparatus is included which is set up to control colour, intensity, position and/or number of the primary light beams (14) of the at least one light source (12) and/or orientation of the partially reflective elements (24) of the at least one reflective apparatus (22), wherein the control apparatus is set up to undertake control on the basis of audio signals.

## Revendications

1. Dispositif (10, 80, 82, 84, 86, 88, 90) destiné à créer un ciel étoilé artificiel blanc ou multicolore (110) comprenant au moins une source lumineuse (12) pour émettre au moins un rayon lumineux primaire polychromatique ou blanc (14) et au moins un équipement de réflexion (22) pour réfléchir le rayon lumineux primaire (14) en une pluralité de rayons lumineux réfléchis, sachant que l'équipement de réflexion (22) comprend une pluralité d'éléments de réflexion partielle (24a, 24b, 24c) pour diviser le rayon lumineux primaire (14) en au moins deux parties, sachant qu'une première partie du rayon lumineux primaire (14) est réfléchie sur un premier côté de la surface de l'élément de réflexion partielle (24a, 24b, 24c), tourné vers la source lumineuse (12) et qu'une seconde partie du rayon lumineux primaire (14) traverse sans entrave un élément de réflexion partielle (24a, 24b, 24c), et que la surface de chaque élément de réflexion partielle (24) est inclinée à un angle autre que 90° par rapport à l'axe du rayon lumineux primaire (14), **caractérisé en que** chaque élément de réflexion partielle (24) comprend une plaquette en plastique ou en verre transparente ou semi-transparente (26) dont l'épaisseur est inférieure à 1 mm, notamment à 500 µm et est de préférence de 200 µm ou moins pour éviter une réflexion diffuse, et qu'une pluralité d'éléments de réflexion partielle (24a, 24b, 24c) sont disposés le long d'un axe du rayon lumineux primaire (28) à différents angles par rapport à l'axe du rayon lumineux primaire (28) de sorte que des rayons lumineux peuvent être déviés sur des points quelconques d'une surface de projection ou en direction d'autres éléments de réflexion partielle (24a, 24b, 24c) de sorte qu'il se produit des réflexions multiples avec des réflexions multiples de second, de troisième ordre ou plus, et que des rayons lumineux réfléchis de différentes intensités rencontrent la surface de projection (72) afin de représenter le ciel étoilé artificiel (110).

2. Dispositif (10, 80, 82, 84, 86, 88, 90) selon la revendication 1, **caractérisé en ce que** la plaquette (26) est recouverte d'une fine couche réfléchissante métallique ou diélectrique partiellement transparente d'une épaisseur inférieure à 100 nm, de préférence inférieure à 50 nm.

3. Dispositif (10, 80, 82, 84, 86, 88, 90) selon une des revendications précédentes, **caractérisé en ce que** l'équipement de réflexion (22) présente une paroi de boîtier (30) partiellement ouverte, constituée d'éléments de miroirs (32) avec au moins un orifice d'entrée (34) pour l'entrée du rayon lumineux primaire (14) et au moins un évidement de sortie (36) pour la sortie des rayons lumineux réfléchis (60, 62, 64), sachant que l'élément partiel de réflexion (24) est disposé sur une surface de miroir principale (38) et est compris de préférence dans au moins un autre plan d'éléments de miroirs de délimitation (40) incliné par rapport à la surface de miroir principale (38).

4. Dispositif (10, 80, 82, 84, 86, 88, 90) selon une des revendications précédentes, **caractérisé en ce que** la source lumineuse (12) comprend au moins un laser à lumière blanche, un laser RJB et/ou un laser unicolore ou multicolore.

5. Dispositif (10, 80, 82, 84, 86, 88, 90) selon une des revendications précédentes, **caractérisé en ce que** le nombre de rayons lumineux primaires (14a, 14b), le sens axial (28) du rayon lumineux primaire (14), la couleur et/ou l'intensité du rayon lumineux primaire (14) sont modifiables.

6. Dispositif (10, 80, 82, 84, 86, 88, 90) selon une des revendications précédentes, **caractérisé en ce que** l'angle de la surface dudit au moins un élément de réflexion partielle (24) est modifiable par rapport au rayon lumineux primaire (14), notamment par un élément de réglage (46) mécanique, électrique ou électromécanique.

7. Dispositif (10, 80, 82, 84, 86, 88, 90) selon une des revendications précédentes, **caractérisé en ce que** l'orientation de l'équipement de réflexion (22) par rapport à l'axe du rayon primaire (28) est variable, notamment au moyen d'un actionneur (48) mécanique, électrique ou électromécanique.

8. Dispositif (10, 80, 82, 84, 86, 88, 90) selon une des revendications précédentes, **caractérisé en ce qu'**une partie du rayon primaire (14) ou un autre rayon primaire (14a, 14b) est dévié(e) le long de l'axe du rayon (28') à position variable par au moins un corps de réfraction (50) transparent ou semitransparent ou sur au moins un corps de réflexion, notamment un cylindre, une ellipsoïde ou une sphère, ou qu'un corps de réfraction ou de réflexion à position variable est déplaçable sur un axe de rayon (28') d'une partie du rayon primaire (14) ou d'un autre rayon primaire (14a, 14b) pour superposer une animation représentant un vol artificiel de comètes (76) sur le ciel étoilé artificiel (110).

9. Dispositif (10, 80, 82, 84, 86, 88, 90) selon une des revendications précédentes, **caractérisé en ce que** par le biais d'au moins un obturateur non mobile ou mobile, d'au moins un miroir ou d'au moins un filtre, au moins un rayon lumineux (14, 58, 60, 62, 64) est dévié et/ou modifié au niveau de sa couleur et/ou de son intensité ou est partiellement ou totalement réfléchi dans l'équipement de réflexion (22).

10. Dispositif (10, 80, 82, 84, 86, 88, 90) selon une des revendications précédentes, **caractérisé en ce que** ladite au moins une source lumineuse (12) produit au moins deux rayons lumineux primaires (14) le long de différents axes de rayon lumineux primaire (28a, 28b), sachant que pour produire un effet tridimensionnel, les rayons lumineux primaires (14) sont polarisés dans différents plans de polarisation ou allumés et éteints en alternance de sorte qu'un observateur puisse percevoir un effet de profondeur tridimensionnel du ciel étoilé (110) au moyen de lunettes polarisantes ou de lunettes à obturation.

11. Dispositif (10, 80, 82, 84, 86, 88, 90) selon une des revendications précédentes, **caractérisé en ce qu'**est compris un dispositif de commande configuré pour commander la couleur, l'intensité, la position et/ou le nombre des rayons lumineux primaires (14) de ladite au moins une source lumineuse (12) et/ou l'orientation des éléments de réflexion partielle (24) dudit au moins un équipement de réflexion (22), sachant que le dispositif de commande est configuré pour procéder à une commande sur la base de signaux audio.
